# DEMANDE DE BREVET EUROPEEN

(11) **EP 1 017 215 A1**
(43) Date de publication de la demande: **05.07.2000**
(21) Numéro de dépôt: 99403099.7
(22) Date de dépôt: 09.12.1999
(51) Int. Cl.: H04M 3/50

(54) **Dispositif de consultation d'un annuaire électronique**

(30) Priorité: 30.12.1998 FR 9816674
(71) Demandeur: FRANCE TELECOM, 75015 Paris (FR)
(72) Inventeur: Vacquie, Luc, 38380 Saint Jean l'Herm (FR)
(74) Mandataire: Moncheny, Michel

(57) **Abrégé**

Ce dispositif de consultation d'un annuaire électronique comprend des moyens (14) d'affichage d'informations relatives à des abonnés et des moyens (16,18,20) d'élaboration de messages à destination d'une liste d'au moins un abonné sélectionné. Il comporte en outre des moyens de commande de l'envoi d'un message à destination du ou de chaque abonné sélectionné, comprenant des moyens automatiques d'établissement d'une liaison téléphonique avec un centre serveur adapté pour transmettre lesdits messages en direction du ou de chaque abonné sélectionné pilotés par les moyens de commande.

## Description

La présente invention se rapporte à un dispositif de consultation d'un annuaire électronique capable d'émettre un message en direction d'un ou de plusieurs abonnés sélectionnés parmi une liste d'abonnés.

L'invention se rapporte également à un système de transmission d'informations utilisant un tel dispositif de consultation.

Actuellement, les dispositifs de consultation d'annuaire, et en particulier d'annuaire électronique, par exemple le "Minitel", ne permettent qu'une recherche et un accès à des informations concernant des abonnés téléphoniques.

Ainsi, par exemple, à l'aide de tels dispositifs de consultation, il n'est pas possible, lors d'une même opération d'interrogation, d'obtenir les coordonnés d'un ou de plusieurs abonnés téléphoniques et de transmettre des messages en direction de ces derniers, dans la mesure où le transfert d'informations s'effectue de façon unidirectionnelle.

Les dispositifs de consultation connus à ce jour présentent, par conséquent, un inconvénient majeur lorsqu'un utilisateur souhaite disposer des coordonnés d'un établissement commercial et transmettre, vers ce dernier, des messages, notamment une réservation, une commande, une demande de devis, etc...

Le but de l'invention est de pallier ces inconvénients.

Elle a donc pour objet un dispositif de consultation d'un annuaire électronique, comprenant des moyens d'affichage d'informations relatives à des abonnés et des moyens d'élaboration de messages à destination d'une liste d'au moins un abonné sélectionné, caractérisé en ce qu'il comporte en outre des moyens de commande de l'envoi d'un message à destination du ou de chaque abonné sélectionné, comprenant des moyens automatiques d'établissement d'une liaison téléphonique avec un centre serveur adapté pour la transmission du message en direction du ou de chaque abonné sélectionné.

Le dispositif de consultation selon l'invention peut en outre comporter une ou plusieurs des caractéristiques suivantes, prises isolément ou selon toutes les combinaisons pratiquement possible ;
- les moyens d'affichage comportent des moyens d'identification des abonnés autorisés à recevoir lesdits messages,
- les moyens d'élaboration de messages comportent au moins un élément choisi parmi un clavier, un organe de prise de vue, et un microphone.

L'invention a également pour objet un système de transmission d'informations vers au moins un abonné téléphonique, au moyen d'un dispositif de consultation tel que défini ci-dessus, et par l'intermédiaire d'un réseau téléphonique, caractérisé en ce qu'il comporte un centre serveur raccordé audit réseau téléphonique et dans lequel est stocké un algorithme d'établissement d'une liaison téléphonique avec le ou chaque abonné sélectionné, et en ce que le dispositif comporte des moyens d'appel automatique du centre serveur.

Avantageusement, le centre serveur comporte en outre des moyens de conversion automatique de données reçues en provenance du dispositif de consultation, d'un premier format selon lequel les données sont véhiculées sur le réseau téléphonique en un deuxième format compatible avec une station de réception de données destinataire desdites informations.

Par exemple, le premier format est un format selon lequel les données se présentent sous la forme de caractères, le deuxième format étant un format selon lequel les données se présentent sous la forme de pixels.

Selon un mode de réalisation, le centre serveur comporte des moyens de stockage de données destinées à être transmises vers la station de réception et des moyens de détection des données stockées en vue de leur conversion automatique.

Selon un autre exemple de réalisation, le centre serveur comporte, stockée en mémoire, une liste d'abonnés auxquels les messages sont autorisés à être transmis.

Avantageusement, le centre serveur comporte en outre des moyens pour ajouter au message transmis un message additionnel, notamment un message publicitaire ou un message contenant des informations de gestion de télécommunications.

Selon encore un autre mode de réalisation, le centre serveur comporte, stockés en mémoire, un historique de messages transmis et des moyens de gestion de la tarification des messages transmis.

L'invention sera mieux comprise à l'aide de la description qui va suivre, donnée uniquement à titre d'exemple et faite en se référant aux dessins annexés, sur lesquels :
- la Fig.1 est une vue schématique de face d'un dispositif de consultation d'un annuaire électronique conforme à l'invention; et
- la Fig.2 illustre de façon schématique la structure générale d'un système de transmission d'informations utilisant le dispositif de consultation de la figure 1.

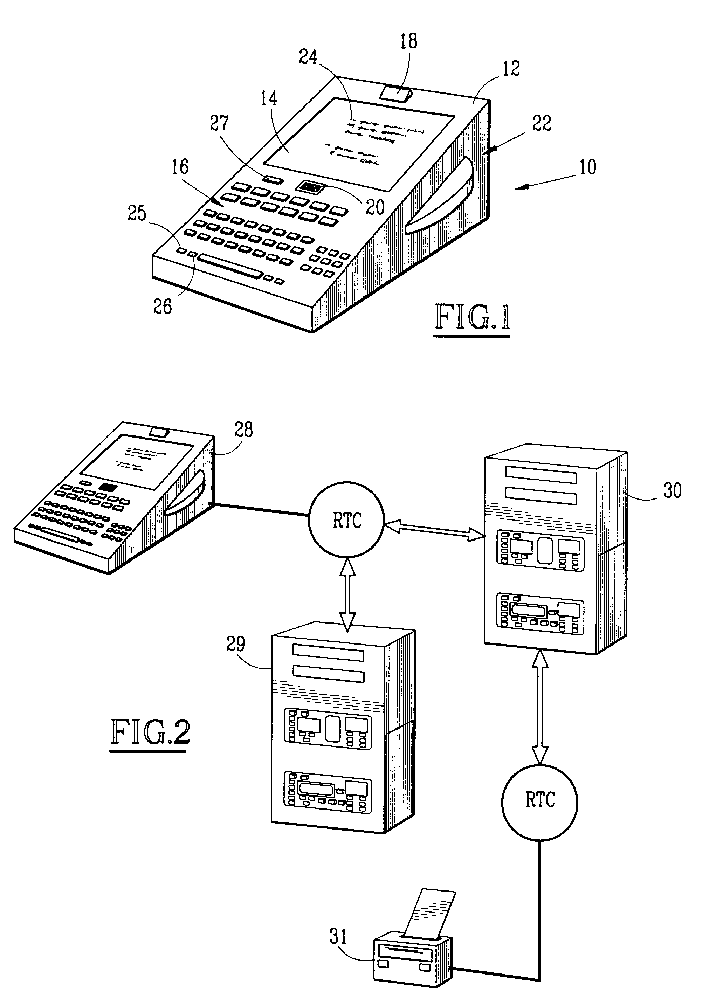

Sur la figure 1, on a représenté une vue en perspective d'un dispositif de consultation d'annuaire électronique, désigné par la référence numérique générale 10.

Comme on le voit sur cette figure, le dispositif 10 comporte un boîtier 12 portant un ensemble d'organes constituant une interface homme/machine.

Ces organes comportent principalement un écran 14 et un clavier 16. Ils peuvent être complétés, comme représenté sur la figure, par un organe de prise de vue 18, un microphone 20, et des haut-parleurs 22, optionnels.

Le dispositif 10 est en outre doté de moyens de raccordement à un réseau téléphonique (non représentés) et de circuits de téléphonie disposés dans le boîtier 12 et permettant l'établissement, comme cela est classique, d'une liaison téléphonique avec un centre serveur en vue d'accéder et de consulter un annuaire électronique.

Avantageusement, des moyens logiciels d'aide à la recherche, stockés dans le centre serveur, permettent de naviguer dans la base de données du serveur en vue de rendre aisé l'accès aux informations stockées.

En réponse à une interrogation, les informations issues du centre serveur, à savoir une liste d'abonnés au téléphone, accompagnée des coordonnés téléphoniques et le cas échéant, d'informations complémentaires, sont affichées sur l'écran 14.

Par ailleurs, et selon l'invention, le dispositif de consultation 10 permet l'élaboration et le transfert de messages en direction d'un ou de plusieurs abonnés sélectionnés parmi une liste d'abonnés fournie par le centre serveur et affichés sur l'écran.

Pour ce faire, le dispositif 10 est doté de moyens de sélection d'un ou de plusieurs abonnés, de moyens d'élaboration du message et de moyens de commande de l'envoi du message élaboré en direction du ou des abonnés sélectionnés.

Pour permettre une sélection des abonnés vers lesquels il est possible de transmettre un message, le dispositif 10 provoque l'affichage, sur l'afficheur 14, de sigles, tels que 24, en regard de l'indication de l'abonné et des coordonnés correspondantes fournis par le centre serveur.

Après sélection d'un ou de plusieurs abonnés, à l'aide de touches de sélection, 25 et 26, du clavier 16, l'utilisateur procède à l'élaboration d'un message à destination du ou des abonnés sélectionnés, à l'aide du clavier 16, pour l'élaboration de messages sous la forme de textes, ou de l'organe de prises de vue 18 ou du microphone 20, pour l'élaboration des messages sous la forme d'images ou de signaux vocaux.

Après élaboration du message, une pression sur une touche 27 spécifique commande l'envoi du message vers le ou les destinataires sélectionnés.

Plus particulièrement, pour la transmission des messages élaborés, le dispositif 10 comporte des moyens d'établissement d'une liaison téléphonique avec un second centre serveur spécifiquement prévu pour ce service.

Ces moyens d'établissement de la liaison téléphonique avec le second centre serveur sont constitués par les circuits de téléphonies placés dans le boîtier 12 et sont actionnés par la touche de commande 27.

Le deuxième centre serveur provoque, en réponse, l'établissement d'une liaison téléphonique avec le ou les correspondants destinataires du message et transfère ces messages en direction du destinataire.

La description d'un système de transmission d'informations basé sur ce principe, utilisant le dispositif de consultation d'annuaire électronique qui vient d'être décrit va maintenant être faite en référence à la figure 2.

On voit sur cette figure que le système comporte un dispositif de consultation 28, identique au dispositif 10 représenté sur la figure 1, raccordé au réseau téléphonique commuté. Un premier centre serveur 29, également raccordé au réseau téléphonique commuté, dans lequel sont stockées des bases de données constituant un annuaire électronique, permet, comme mentionné précédemment, de fournir au dispositif 28, après interrogation, une liste d'abonnés au téléphone.

Un second centre serveur 30 assure la transmission, après sélection d'un ou de plusieurs abonnés destinataires, de messages élaborés au moyen du dispositif de consultation 28 en direction d'un poste de réception de données 31 placé chez chaque abonné.

Comme dans l'exemple de réalisation représenté sur la figure 1, le dispositif de consultation 28 comporte des moyens de composition automatique du numéro téléphonique du centre serveur 28, permettant l'établissement d'une liaison téléphonique avec ce dernier après élaboration d'un message et sélection d'un ou de plusieurs abonnés en direction desquels il convient de transmettre ce message.

Le second centre serveur 30 comporte des moyens de mémorisation dans lesquels sont stockés lesdits messages reçus en provenance du dispositif 26 et des moyens de détection du stockage de données dans les moyens de mémorisation, de type classique.

Il comporte également des moyens automatiques d'établissement d'une liaison téléphonique avec le ou les abonnés destinataires du message, établissant cette liaison après détection du stockage des données dans les moyens de mémorisation.

Dans l'exemple de réalisation représenté sur la figure 2, le message élaboré dans le dispositif de consultation 26 est un message destiné à être transmis vers un télécopieur 31 raccordé au réseau téléphonique commuté.

Dans ce cas, les messages véhiculés entre le dispositif de consultation 28 et le second centre serveur 30 se présentent sous la forme d'un fichier texte constitué par l'association des chaines de caractères, alors que les données susceptibles d'être reçues par le télécopieur 31, se présentent sous la forme d'éléments d'images.

Pour permettre la transmission des données en direction du télécopieur 31, le centre serveur 30 comporte, stocké en mémoire, un algorithme de conversion capable d'assurer la conversion des données du premier format, selon lequel les données sont émises par le dispositif de consultation 28 en un deuxième format, selon lequel les données sont adaptées pour être véhiculées sur le réseau téléphonique en direction du télécopieur 31 et traitées par ce dernier.

Cet algorithme de conversion est un algorithme de type classique approprié pour l'utilisation envisagée. Il ne sera donc pas décrit en détail par la suite.

On notera toutefois qu'il est constitué par un algorithme capable de convertir les chaînes de caractères reçues en provenance du dispositif de consultation 28 en tableau de pixels associés chacun à une valeur de niveau de gris.

Après exécution de cette conversion, le centre serveur 30 provoque l'établissement d'une liaison téléphonique avec le télécopieur 31 destinataire, et envoie le message converti en direction de ce dernier.

On conçoit que l'invention qui vient d'être décrite permet ,d'une part, d'obtenir des informations relatives à des abonnés au téléphone, par exemple à des établissements commerciaux et, d'autre part, de transmettre, en direction de ces derniers, des messages, tels que des commandes de devis, des réservations, ...

L'invention n'est toutefois pas limitée à la description faite en référence aux figures 1 et 2.

Il est en effet possible, en variante, de stocker, dans le second centre serveur 30, une liste d'abonnés en direction desquels des messages peuvent être transmis, avantageusement regroupés de manière à provoquer l'émission simultanée d'un message en direction de tous les abonnés d'un groupe auquel appartient l'abonné sélectionné.

Il est également possible, en variante, de prévoir, dans la mémoire du second centre serveur 30, un historique des messages transmis et un algorithme de gestion de la tarification des messages transmis en vue de la facturation du service fourni.

Il est enfin possible de prévoir dans la mémoire du second centre serveur 30, un algorithme permettant d'ajouter au message transmis un message additionnel, notamment un message publicitaire ou un message contenant des informations de gestion de télécommunication, par exemple portant sur le compte du destinataire.

## Revendications

1. Dispositif de consultation d'un annuaire électronique, comprenant des moyens d'affichage d'informations relatives à des abonnés et des moyens d'élaboration de messages à destination d'une liste d'au moins un abonné sélectionné, caractérisé en ce qu'il comporte en outre des moyens de commande de l'envoi d'un message à destination du ou de chaque abonné sélectionné, comprenant des moyens automatiques d'établissement d'une liaison téléphonique avec un centre serveur adapté pour la transmission du message en direction du ou de chaque abonné sélectionné pilotés par les moyens de commande.

2. Dispositif selon la revendication 1, caractérisé en ce que les moyens d'affichage comportent des moyens d'identification des abonnés autorisés à recevoir lesdits messages.

3. Dispositif selon l'une des revendications 1 et 2, caractérisé en ce que les moyens d'élaboration de messages comportent au moins un élément choisi parmi un clavier, un organe de prise de vue, et un microphone.

4. Système de transmission d'informations vers au moins un abonné téléphonique, au moyen d'un dispositif de consultation selon l'une quelconque des revendications 1 à 3, et par l'intermédiaire d'un réseau téléphonique, caractérisé en ce qu'il comporte un centre serveur raccordé audit réseau téléphonique et dans lequel est stocké un algorithme d'établissement d'une liaison téléphonique avec le ou chaque abonné sélectionné et en ce que le dispositif comporte des moyens d'appel automatique du centre serveur.

5. Système selon la revendication 4, caractérisé en ce que le centre serveur comporte en outre des moyens de conversion automatique des données reçues en provenance du dispositif de consultation, d'un premier format selon lequel les données sont véhiculées sur le réseau téléphonique en un deuxième format compatible avec une station de réception de données destinataire desdites informations.

6. Système selon la revendication 5, caractérisé en ce que le premier format est un format selon lequel les données se présentent sous la forme de caractères et en ce que le deuxième format est un format selon lequel les données se présentent sous la forme de pixels.

7. Système selon l'une des revendications 5 et 6, caractérisé en ce que le centre serveur comporte des moyens de stockage de données destinées à être transmises vers ladite station de réception et des moyens de détection de données stockées en vue de leur conversion automatique.

8. Système selon l'une quelconque des revendications 4 à 7, caractérisé en ce que le centre serveur comporte, stockée en mémoire, une liste d'abonnés auxquels les messages sont autorisés à être transmis.

9. Système selon l'une quelconque des revendications 4 à 8, caractérisé en ce que le centre serveur (30) comporte, stockés en mémoire, un historique de messages transmis et des moyens de gestion de la tarification des messages transmis.

10. Système selon l'une quelconque des revendications 4 à 9, caractérisé en ce que le centre serveur (30) comporte en outre des moyens pour ajouter au message transmis un message additionnel, notamment un message publicitaire ou un message contenant des informations de gestion de télécommunications.
